# EUROPEAN PATENT SPECIFICATION

(11) **EP 2 268 739 B1**
(45) Date of publication and mention of the grant of the patent: **03.09.2014**
(21) Application number: 09734805.6
(22) Date of filing: 17.04.2009
(51) Int. Cl.: C08L 67/04, C08L 35/04, C08L 35/06, C08L 25/04, C08L 33/12, C08L 33/08, C08J 5/00, C08L 25/14, C08L 25/08

(54) **HEAT RESISTANT POLYLACTIC ACID COMPOUNDS**
WÄRMERESISTENTE POLYMILCHSÄUREZUSAMMENSETZUNGEN
COMPOSES D'ACIDE POLYLACTIQUE RESISTANT A LA CHALEUR

(30) Priority: 24.04.2008 US 47460 P; 20.03.2009 US 161902 P
(43) Date of publication of application: 05.01.2011
(73) Proprietor: PolyOne Corporation, Avon Lake, OH 44012 (US)
(72) Inventor: ZHU, Shixiong, Avon, OH 44011 (US); MCDANIEL, Charles, W., Elyria, OH 44035 (US); AVAKIAN, Roger, W., Solon, OH 44139-4047 (US)
(74) Representative: Winter, Brandl, Fürniss, Hübner, Röss, Kaiser, Polte - Partnerschaft mbB
(86) International application number: PCT/US2009/040904
(87) International publication number: WO 2009/131903

(56) References cited:
- WO-A1-2006/121056
- WO-A1-2007/083820
- JP-A- 2005 187 533
- JP-A- 2007 009 008
- US-A- 5 300 576
- US-A1- 2006 263 394
- DATABASE WPI Week 200451 Thomson Scientific, London, GB; AN 2004-529096 XP002625981, & JP 2004 190026 A (TORAY IND INC) 8 July 2004 (2004-07-08)
- DATABASE WPI Week 200474 Thomson Scientific, London, GB; AN 2004-751329 XP002625982, & JP 2004 292625 A (TORAY IND INC) 21 October 2004 (2004-10-21)

## Description

### FIELD OF THE INVENTION

This invention relates to polylactic acid compounds which have a heat resistance modifier to improve structural integrity of the polylactic acid compounds during use.

### BACKGROUND OF THE INVENTION

Plastic articles have replaced glass, metal, and wood articles because plastic can be engineered to not shatter, rust, or rot. The durability of plastic articles also creates a disposal dilemma. Also, many plastic resins are made from petrochemicals, which have long-term supply and cost issues.

Therefore, there is a considerable effort underway to find biologically-derived and sustainable sources of thermoplastic resins, preferably those which degrade or compost to also resolve the disposal dilemma.

Polylactic acid, also known as polylactide or PLA, has been explored as a thermoplastic resin from biologically sustainable origins which can replace petrochemically originated resins.

JP 2004190026 A discloses resin compositions comprising a flame retardant in a blend of polylactic resin and a resin such as polyamide for producing molded articles having favourable mechanical properties and good flame retardance and heat resistance. JP 2004292625 A discloses resin compositions comprising polylactic resin and polyacetal resin for producing molded articles having good transparency and heat resistance. US 2006/0263394 A discloses biodegradable plastics obtained from blends of polylactic acid and ethylene copolymer resins. US 5,300,576 A discloses biodegradable polymer alloys comprising a polylactide and one or more polymers selected from (a) polycarbonates, (b) copolymers of vinyl aromatic monomers, anhydrides of ethylenically unsaturated dicarboxylic acids, and alkyl or hydroxy alkyl (meth)acrylates, and (c) acrylate polymers.

### SUMMARY OF THE INVENTION

While polylactic acid is probably one of the three most popular bio-derived resins being explored, it has the distinct disadvantage, as when compared to the fossil-derived resins it is meant to replace, in that it has a poor heat deflection temperature.

Heat deflection temperature (HDT) is a measurement of deflection of a sample under flexural load using the protocol of ASTM D648. The flexural load can be either of two settings. For purposes of this invention, 66 pounds per square inch (psi) or 455 kilo-Pascals (kPa) will be used for comparative measurements of heat deflection.

The problem with polylactic acid is that it has a heat deflection temperature under a 455 kPa flexural load of about 55°C or 131°F. In other words, inside a automobile on an Arizona summer day, PLA would not be sturdy enough to be used as a thermoplastic resin molded into a passenger compartment component, as the case for an electronic handheld device laying on the seat, or as a piece of packaging containing perishable food in a grocery bag on the floor inside the automobile.

The problem with PLA is that it does not have sufficient heat resistance to allow it to be considered as a practical replacement for fossil-derived thermoplastic resins now used in many common plastic articles.

The present invention solves that problem by finding and using a heat resistance modifier to be combined with PLA to increase the heat resistance of PLA so that it can be used ubiquitously.

The art has had a long-felt need for solving this heat resistance problem. Published literature of NatureWorks, LLC, a principal manufacturer of PLA reports that adding as much as 50% by weight of polymethyl methacrylate (PMMA) to PLA to create a 50/50 PLA-PMMA compound improves HDT by as little as 4 °C over the HDT of pure PLA polymer resin (63°C vs. 59°C).

Moreover, the art has had a long-felt need for solving this heat resistance problem, and it has been commonly characterized in some industries that a PLA compound should preferably have at least a 65°C HDT at 455 kPa (66 psi) to be a practical thermoplastic compound of both biologically sustainable origin and practical commercial use. At long last, the present invention has discovered also suitable combinations to achieve, and exceed, that goal of 65°C at 455 kPa (66 psi).

The art needs a means to increase the actual HDT values for PLA, while also retaining the resulting compound as principally significantly a PLA compound.

For purposes of this invention, the PLA must remain the "significant component", meaning that PLA is present in at least about thirty weight percent (30%) of the compound.

For some situations when it is desirable to market plastic articles made from the compound as made principally from bio-renewable materials, the PLA can be present as the "principal component", meaning that it has the highest or equal to highest weight percent of the compound among all ingredients employed. For example, PLA will be the "principal component" in a two-ingredient compound if it has 50% or more weight percent of the total compound. PLA will also be the "principal component" in a three-or-more- ingredient compound if it has a plurality weight percent in excess of any other ingredient, e.g., 34% PLA in a compound with two other ingredients each having 33 weight percent. PLA is also the "principal component" for this invention if its weight percent is equal to the weight percent of one other ingredient, such as in a 30 (PLA) -30-20-20 (other ingredients) in a four- ingredient compound.

It has been found, unexpectedly, that styrene maleic anhydride copolymer can increase the HDT of a PLA compound by at least 5°C more than the HDT for PLA alone. A blend of PLA and styrene maleic anhydride copolymer can also preferably have a HDT of more than 65°C.

One aspect of the present invention is a heat resistant polylactic acid compound, comprising: a blend of (a) polylactic acid and (b) styrene maleic anhydride copolymer; wherein polylactic acid is present in at least 30 weight percent of the compound; and wherein polylactic acid and styrene maleic anhydride copolymer have a weight ratio of 2.3:1.0 or less; and wherein if the blended compound is dried to have a moisture content of less than 0.1 % before shaping into a plastic article, then the blended compound after shaping into the plastic article has a heat deflection temperature increase of at least 5°C more than the heat deflection temperature of the polylactic acid alone, when both are measured at 455 kPa (66 pounds per square inch) using the protocol of ASTM D648.

Alternatively, the heat resistant polylactic acid compound also includes a compatibilizer, such as polymethyl methacrylate of any crystallinity (PMMA), to assist the blending of polylactic acid and the styrene maleic anhydride copolymer (SMAC).

Optionally, the heat resistant polylactic acid compound also includes a rubbery impact modifier, such as a styrene butadiene rubber (SBR) with the PLA, SMAC, and PMMA to enhance impact resistance or toughness of a plastic article made from the compound.

Alternatively to the option of using a compatibilizer, with or without impact modifier, the heat resistant polylactic acid compound can include filler, such as calcium carbonate (CaCO₃) and also achieve the goal of 5°C HDT differential at 455 kPa (66 psi).

Preferably, the HDT of the compound of the present invention not only has a 5°C differential HDT at 455 kPa (66 psi) but also has a HDT of at least 65°C.

Preferably, the amount of styrene maleic anhydride copolymer ranges from 7 to 54 weight percent of the to tal compound and polylactic acid and styrene maleic anhydride copolymer have a weight ratio of 1.9:1.0 or less.

Preferably, the blended compound after being essentially dried has a moisture content of less than 0.1% and the polylactic acid is the component having the highest or equal to highest weight percent of the compound among all ingredients employed.

Features and advantages of the compound of the present invention will be further explained with reference to the embodiments and the examples showing the unexpected results.

### EMBODIMENTS OF THE INVENTION

### Polylactic acid

PLA is a well-known biopolymer, having the following monomeric repeating group:

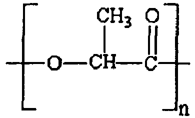

The PLA can be either poly-D-lactide, poly-L-lactide, or a combination of both. PLA is commercially available from NatureWorks, LLC located in all manufacturing regions of the world. Any grade of PLA is a candidate for use in the present invention. The number average molecular weight of PLA can be any which is currently available in a commercial grade or one which is brought to market in the future. To the extent that a current end use of a plastic article could benefit from being made from PLA and from having the heat resistance of the compound of the present invention, then that suitable PLA should be the starting point for constructing the compound of the present invention.

### Styrene Maleic Anhydride Copolymer

SMAC is a copolymer having the following co-monomeric repeating group:

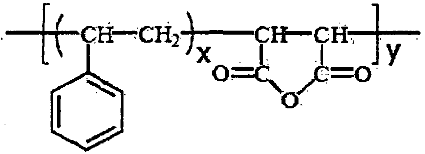

Candidates of SMAC for the present invention can be based on a combination of two different factors: percentage maleic anhydride content and molecular weight.

One set of candidates relies on a low molar ratio of styrenic moiety to maleic anhydride moiety and a low molecular weight of SMAC. This set of candidate SMACs can have a molar ratio of styrenic moiety to maleic anhydride moiety ranging from about 4:1 to about 1:1, and preferably about 1:1. Likewise, such candidates should have a number average molecular weight ranging from about 1000 to about 50,000, and preferably from about 2000 to about 10,000. Most preferably, the SMAC has a number average molecular weight of 2000.

SMAC of this first set of candidates is commercially available in a number of grades under the SMA^{®} brand of SMAC from Sartomer Company of Exton, PA, USA. Of them, SMA^{®} 1000 is preferred.

The second set of candidates relies on a high molar ratio of styrenic moiety to maleic anhydride moiety and a high molecular weight of SMAC. This set of candidate SMACs can have a molar ratio of styrenic moiety to maleic anhydride moiety ranging from about 20:1 to about 5:1, and preferably about 10:1. Likewise, such candidates should have a number average molecular weight ranging from about 75,000 to about 250,000, and preferably from about 100,000 to about 200,000. Most preferably, the SMAC has a number average molecular weight of 150,000.

SMAC of this second set of candidates is commercially available in a number of grades under the Dylark^{®} brand of SMAC from Nova Chemicals of Pittsburgh, PA, USA. Of them, Dylark^{®} FG7300 and FG2500 are preferred. Another source is from Polyscope Polymers BV of Roermond, the Netherlands bearing the Xiran^{®} brand in a number of grades with Mn of 80,000 -180,000 and a styrenic/maleic anhydride moiety ratio range of 4.54:1 -- 2.94:1. Presently, Xiran SZ22110 and Xiran SZ26080 grades are preferred.

Presently, there is no set of commercially available SMAC candidates which have both a high molecular weight SMAC and a low styrenic/maleic anhydride moiety ratio. If there were, that set of candidates could also be useful.

### Optional Compatibilizer

To assist in the blending of PLA and SMAC, a compatibilizer can be used. Any dual-affinity compound or molecule with affinity for lactide moieties and either styrenic or anhydridic moieties can be a candidate for use as a compatibilizer.

Of possible candidates, poly (meth)acrylates of any crystallinity are desirable because compatibility and flexibility of synthesis. Of them, polymethyl methacrylate is preferred because the possibility of recycling, the possibility of being made from biomass, its globally available and lower cost.

### Optional Impact Modifier

Any conventional impact modifier is a candidate for use in compounds of the present invention. Core/shell impact modifiers, rubbery impact modifiers, etc. are suitable.

### Optional Filler

Any conventional filler is a candidate for use in compounds of the present invention. Fillers increase mass without adversely affecting the physical properties of the compound. It has been found that a precipitated calcium carbonate marketed under the Emforce^{®} from Specialty Minerals, a business unit of Mineral Technologies, Inc. of New York City is suitable for use in the present invention.

### Other Optional Additives

The compounds of the present invention can include other conventional plastics additives in an amount that is sufficient to obtain a desired processing or performance property for the compound. The amount should not be wasteful of the additive nor detrimental to the processing or performance of the compound. Those skilled in the art of thermoplastics compounding, without undue experimentation but with reference to such treatises as Plastics Additives Database (2004) from Plastics Design Library (www.williamandrew.com), can select from many different types of additives for inclusion into the compounds of the present invention.

Non-limiting examples of optional additives include adhesion promoters; biocides (antibacterials, fungicides, and mildewcides), anti-fogging agents; anti-static agents; bonding, blowing and foaming agents; dispersants; fire and flame retardants and smoke suppresants; initiators; lubricants; pigments, colorants and dyes; plasticizers; processing aids; release agents; slip and anti-blocking agents; stabilizers; stearates; ultraviolet light absorbers; viscosity regulators; waxes; and combinations of them.

**Table 1 shows acceptable, desirable, and preferable ranges of ingredients useful in the present invention, all expressed in weight percent (wt. %) of the entire compound.**

| **Table 1** | | | |
|---|---|---|---|
| | **Acceptable** | **Desirable** | **Preferable** |
| PLA Matrix | 30-80 | 30-75 | 30-70 |
| SMAC Heat Resistance Modifier* | 7-54 | 14-50 | 20-47 |
| Optional Compatibilizer | 0-20 | 0-20 | 0-20 |
| Optional Impact Modifier | 0-20 | 0-20 | 0-20 |
| Optional Filler | 0-20 | 0-20 | 0-20 |
| Other Optional Additives | 0-10 | 0-10 | 0-10 |

| | | | |
|---|---|---|---|
| *with the weight ratio of PLA:SMAC being 2.3:1.0 or less. | | | |

### Processing

The preparation of compounds of the present invention is uncomplicated. Generally, a method of making the compound of the present invention comprises the steps of (a) gathering ingredients including polylactic acid and styrene maleic anhydride copolymer and (b) blending them into a compound for subsequent molding or extruding into a plastic article shaped for use in transportation, appliance, electronics, building and construction, packaging, or consumer markets. The method may further comprise the steps of (c) drying the blended compound to a moisture content of less than 0.1% and (d) shaping the blended compound into the plastic article for use in transportation, appliance, electronics, building and construction, packaging, or consumer markets.

The compound of the present can be made in batch or continuous operations.

Mixing in a continuous process typically occurs in an extruder that is elevated to a temperature that is sufficient to melt the polymer matrix with addition either at the head of the extruder or downstream in the extruder of the solid ingredient additives. Extruder speeds can range from about 50 to about 500 revolutions per minute (rpm), and preferably from about 100 to about 300 rpm. Typically, the output from the extruder is pelletized for later extrusion or molding into polymeric articles.

Mixing in a batch process typically occurs in a Banbury mixer that is also elevated to a temperature that is sufficient to melt the polymer matrix to permit addition of the solid ingredient additives. The mixing speeds range from 60 to 1000 rpm and temperature of mixing can be ambient. Also, the output from the mixer is chopped into smaller sizes for later extrusion or molding into polymeric articles.

Optionally prior to batch or continuous blending, one can dry the ingredients to help reduce the possibility of a moisture-activated degradation or reaction in the blending vessel. Alternatively, one can use other ways to reduce degradation possibilities, such as incorporating a moisture scavenger or desiccant into the formulation, applying a vacuum within the blending vessel, etc. Any of these techniques, or combination of techniques, results in the ingredients being dried before or during blending. These are optional techniques because it has been found, as seen in the Examples below, that an un-dried set of ingredients can be extruded and later molded into a plastic article which meets the goal of at least a 5 °C HDT differential and preferably a 65°C HDT at 455 kPa (66 psi) flexural load.

Subsequent extrusion or molding techniques are well known to those skilled in the art of thermoplastics polymer engineering. Without undue experimentation but with such references as "Extrusion, The Definitive Processing Guide and Handbook"; "Handbook of Molded Part Shrinkage and Warpage"; "Specialized Molding Techniques"; "Rotational Molding Technology"; and "Handbook of Mold, Tool and Die Repair Welding", all published by Plastics Design Library (www.williamandrew.com), one can make articles of any conceivable shape and appearance using compounds of the present invention.

Regardless of drying or other techniques during blending, it has been found that drying the blended compound before molding has a direct effect on performance properties, including heat deflection temperature. As the Examples below demonstrate, the amount of drying should be much closer to about 48 hours than about 4 hours, in order to achieve an essentially dry blended compound prior to molding, i.e., having a moisture content of less than 0.1 %. To reduce the possibility of drying at a temperature approaching the heat deflection temperature of 65°C, the temperature can be up to about 60°C without vacuum. Indeed, without undue experimentation, one can identify the best combination of time, temperature, and atmospheric pressure to reduce the time of drying while maximizing the amount of drying, without approaching a temperature which would degrade or otherwise affect performance of the compound as a molded or extruded product.

### USEFULNESS OF THE INVENTION

Any plastic article is a candidate for use of the compounds of the present invention. With the heat durability of PLA now achieved, all types of plastic articles which required at least a 5 °C HDT differential (and preferably a HDT of at least 65°C at 455 kPa (66 psi)), previously made from fossil-derived polymers, can now be made from a sustainable PLA polymer compound.

Plastic articles made from compounds of the present invention can be shaped via molding or extruding for use in the transportation, appliance, electronics, building and construction, biomedical, packaging, and consumer markets.

For example, food packaging can now be made from a PLA compound of the present invention and retain sufficient heat resistance to withstand storage or transport at temperatures approaching 60°C. The plastic article made from a compound of the present invention will retain its structural integrity at least 5 °C higher than with PLA alone and preferably at temperatures below 65°C.

Examples prove the unexpected nature of the present invention.

### EXAMPLES

### Comparative Examples A -D and Examples 1-19

Neat PLA resin was obtained and 18 different compounds were prepared.

Comparative Example A is neat PLA resin undergoing the same extrusion and molding heat histories as do Comparative Examples B-D and Examples 1-19. Comparative Example B demonstrates that neither a delta HDT of 5°C nor a HDT of 65°C at 455 kPa (66 psi) can be achieved by attempting to crosslink the PLA. Thus, the obvious approach to improving HDT does not work.

All of Examples 1-19 meet and exceed the >5°C delta HDT goal, and many of them exceed the 65°C HDT goal. Unexpectedly, for the first known time, because of the use of SMAC as a heat resistance modifier, PLA can be compounded to have a delta HDT meeting or exceeding 5°C with PLA remaining as the principal component in the compound and also often meeting or exceeding a HDT of 65°C at 455 kPa (66 psi) flexural load.

**Table 2 shows the raw material ingredients employed.**

| **Table 2** | | | | |
|---|---|---|---|---|
| **Ingredients** | | | | |
| **Name** | **Brand** | **Composition** | **Manufacturer** | **Function** |
| PLA | Nature Works^{®} Polylactide Resin 4042D | Polylactide Resin | NatureWorks LLC | Matrix |
| SMAC | SMA 1000P | Styrene Maleic Anydride resin, cumene end-capped | Sartomer Company, Inc. | Heat Resistance Modifier |
| PMMA | Plexiglas^{®} VS-100 Acrylic Resin | Poly(Ethyl acrylate/Methyl methacrylate) | Arkema Inc. | Compatibilizer |
| ABS | Blendex^{®} 338 | Acrylonitrile-butadienestyrene polymer | Chemtura | Impact Modifier |
| Peroxide | Trignox^{®} 101 | 2, 5-Dimethyl-2,5-di(tert-butylperoxy) hexane | Akzo Nobel Polymer Chemicals LLC | Crosslinking Agent |
| Silane | Silquest^{®} A171 | Vinyl Trimethoxy Silane | Momentive | Crosslinking Agent |
| CaCO₃ | Emforce^{®} Bio additive | Precipitated Calcium Carbonate | Specialty Minerals | Filler |

Table 3 (in two parts) shows the recipes for the compounds. Table 4 (in two parts) shows the extrusion conditions to produce pellets for later molding. Table 5 (in two parts) shows the molding conditions to produce molded articles as needed for the HDT testing. Table 6 (in two parts) shows the average of HDT results using four different samples of each Example and Comparative Example, with a standard deviation provided.

In Table 3, Comparative Example B and Examples 3-8 and 15-17 had the resins dried before extrusion commenced using the following technique: all of the polymeric resins were dried overnight at 80°C in a convection oven without a vacuum applied. The other Comparative Examples and Examples were not dried before extrusion.

As shown in Table 4, extruder conditions for all Examples and Comparative Examples were very similar. As shown in Table 5, molding conditions for all Examples and Comparative Examples were very similar. Processing variability was minimized.

Table 6 shows several features of the invention arising from the HDT results as measured in degrees Celsius under flexural load of 455 kPa (66 psi) according to the protocol of ASTM D648.

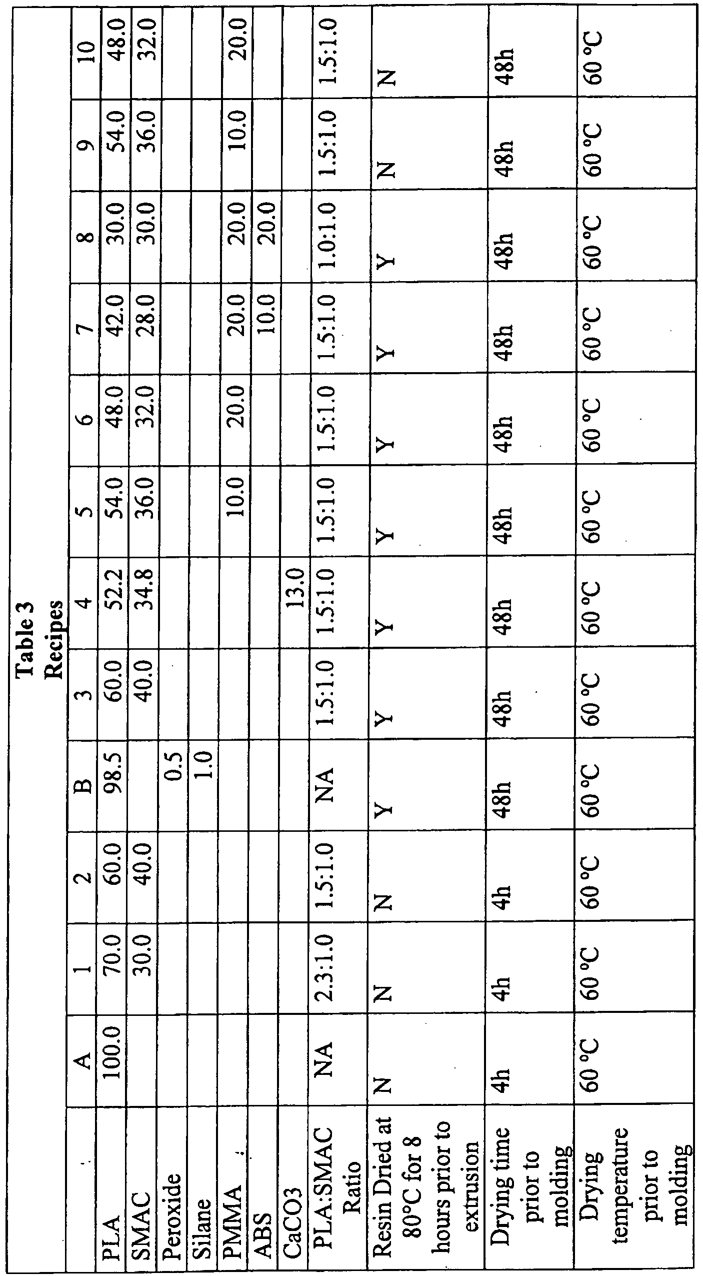

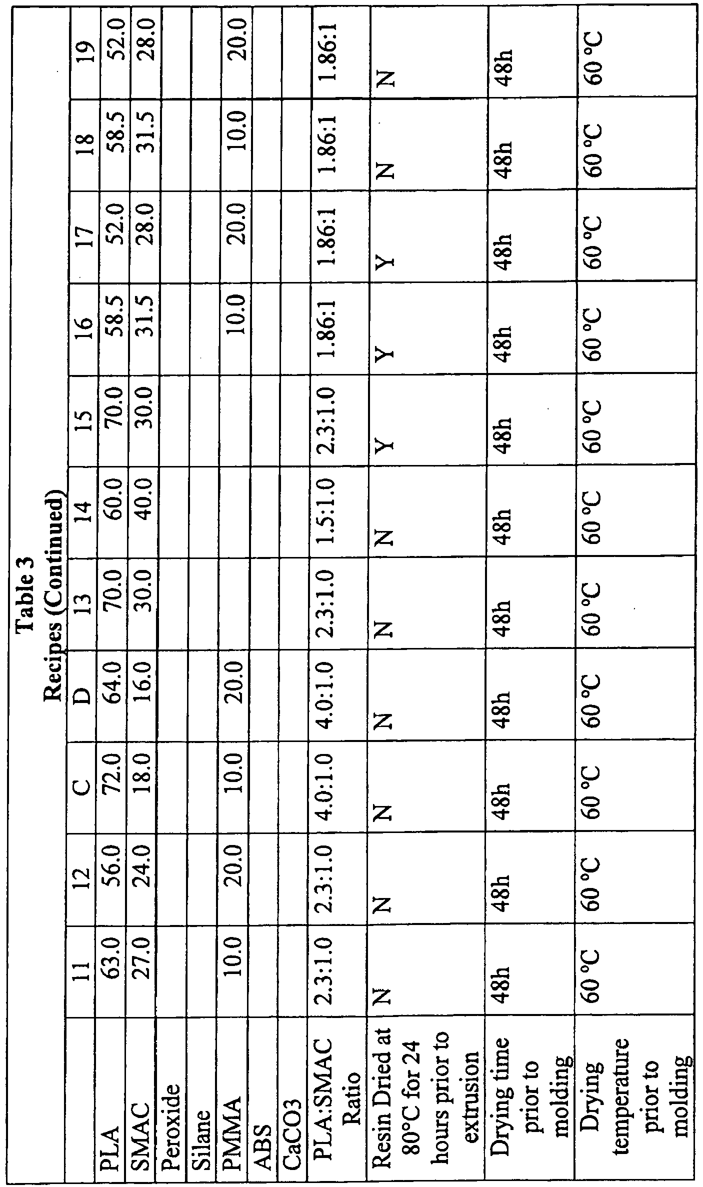

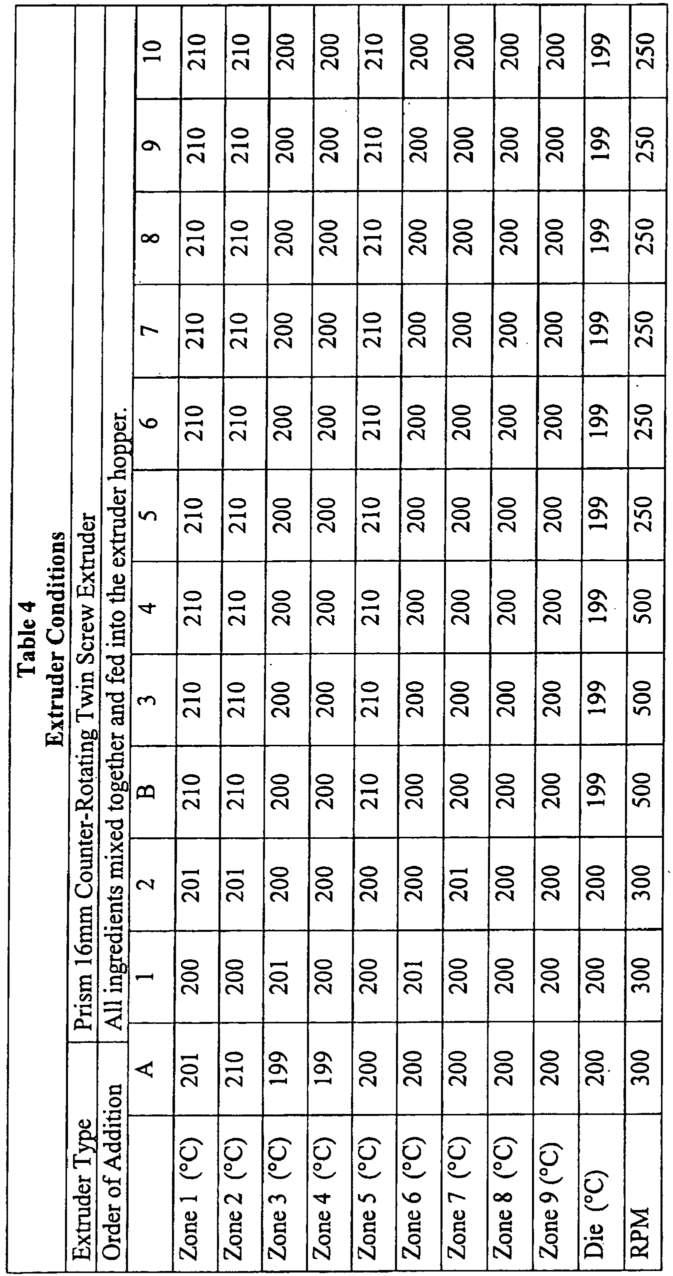

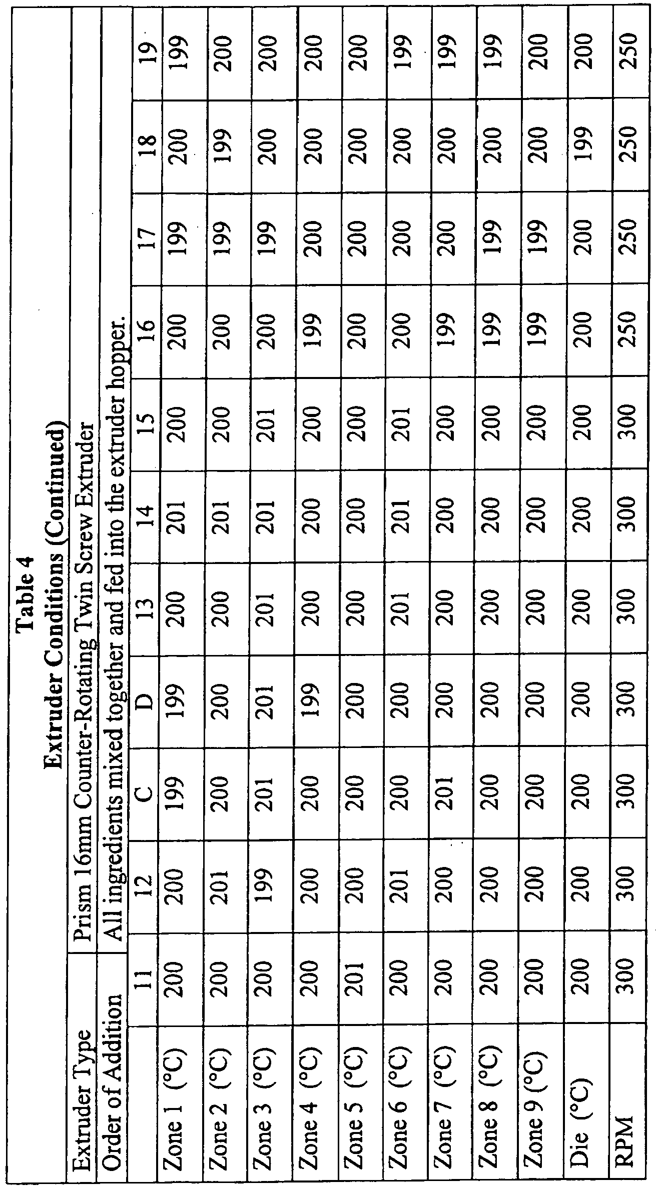

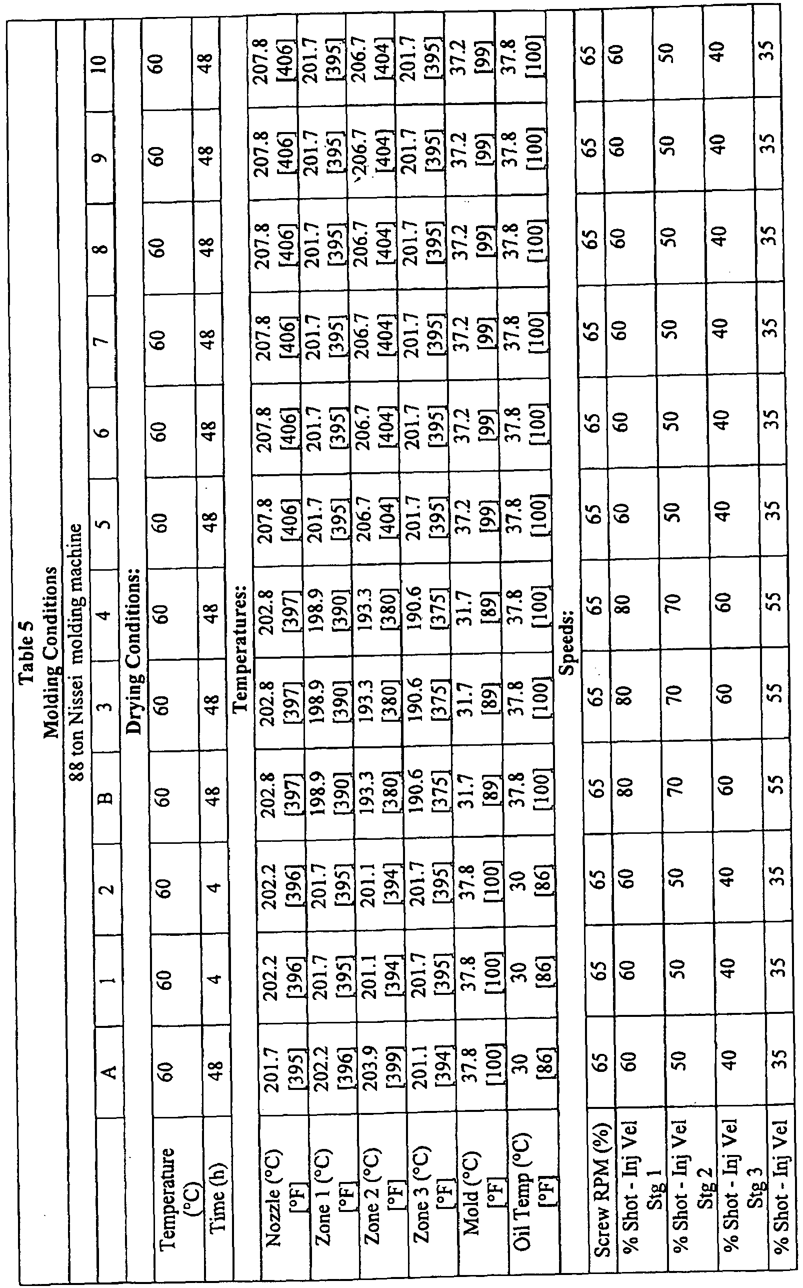

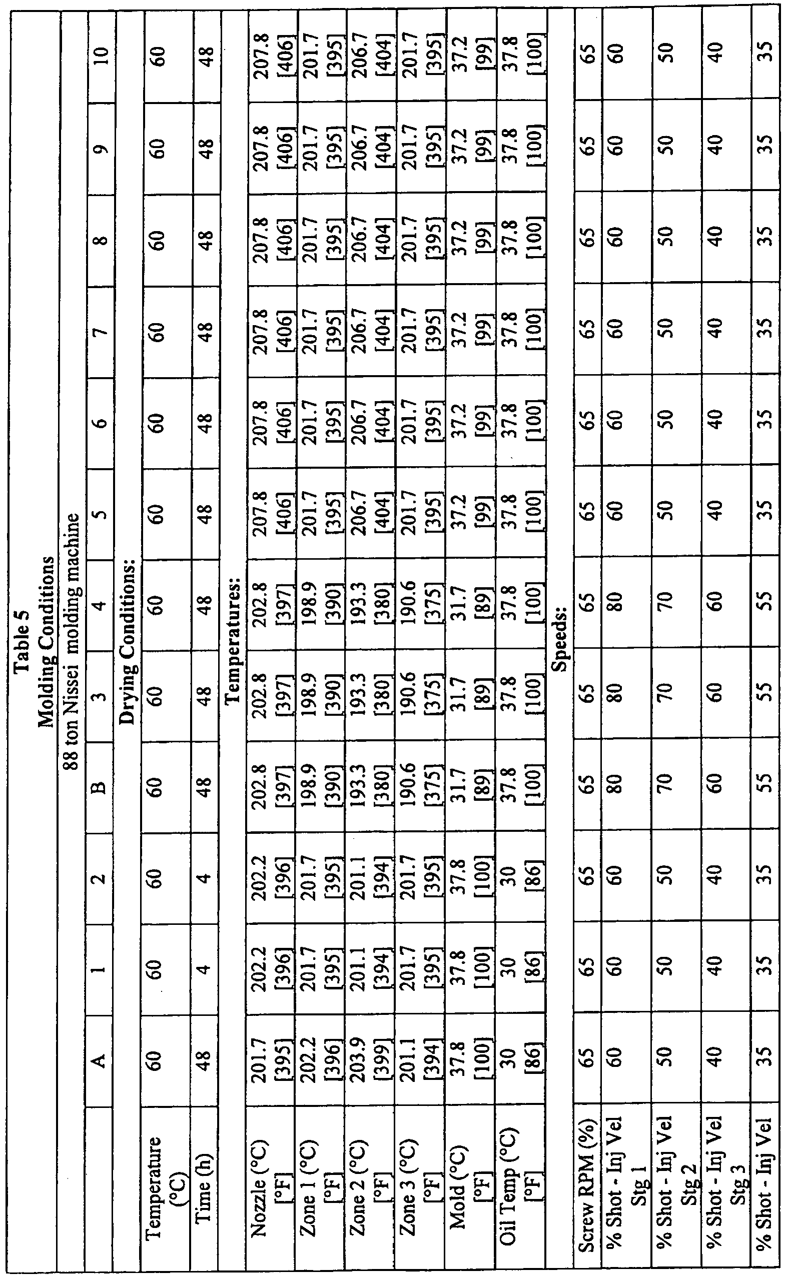

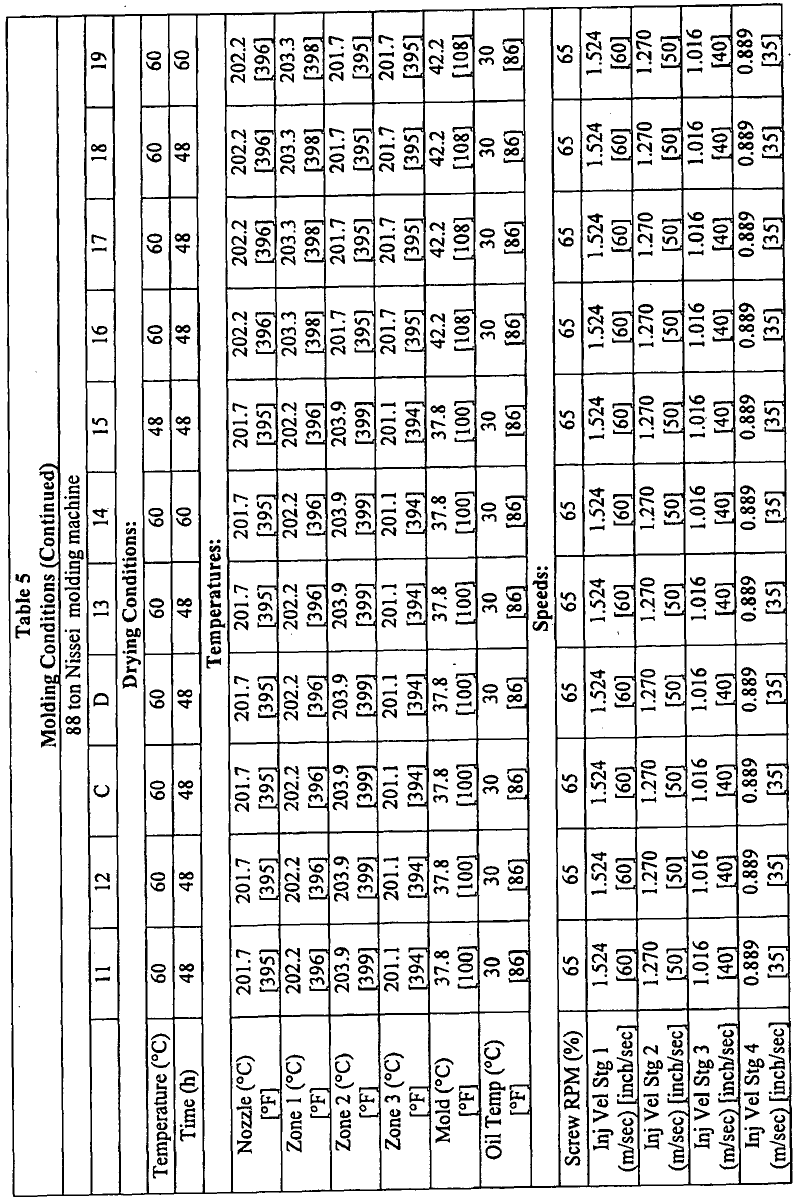

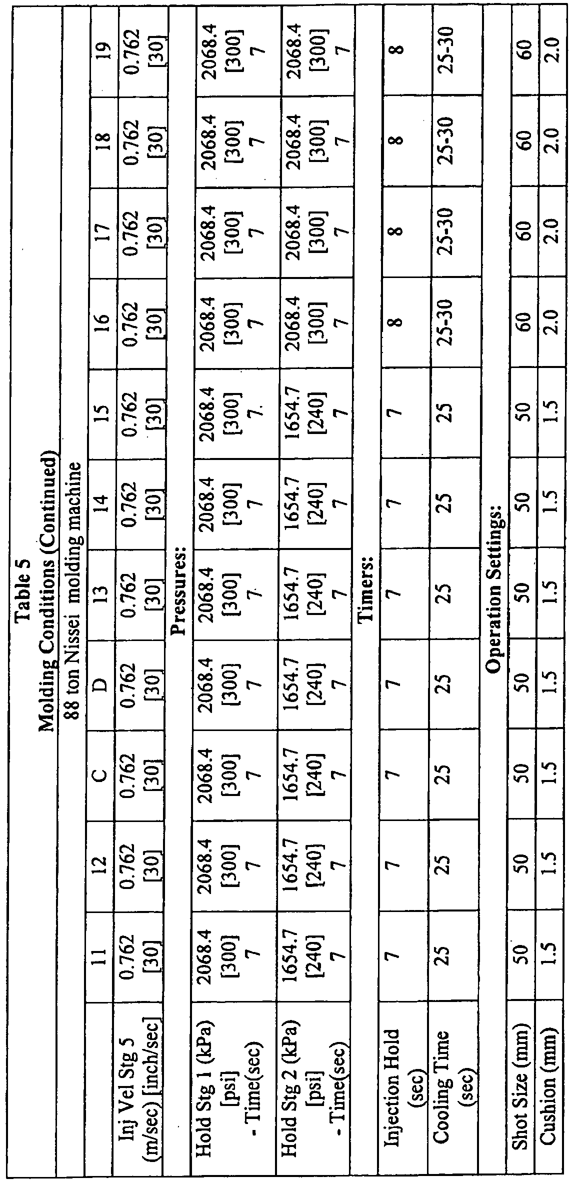

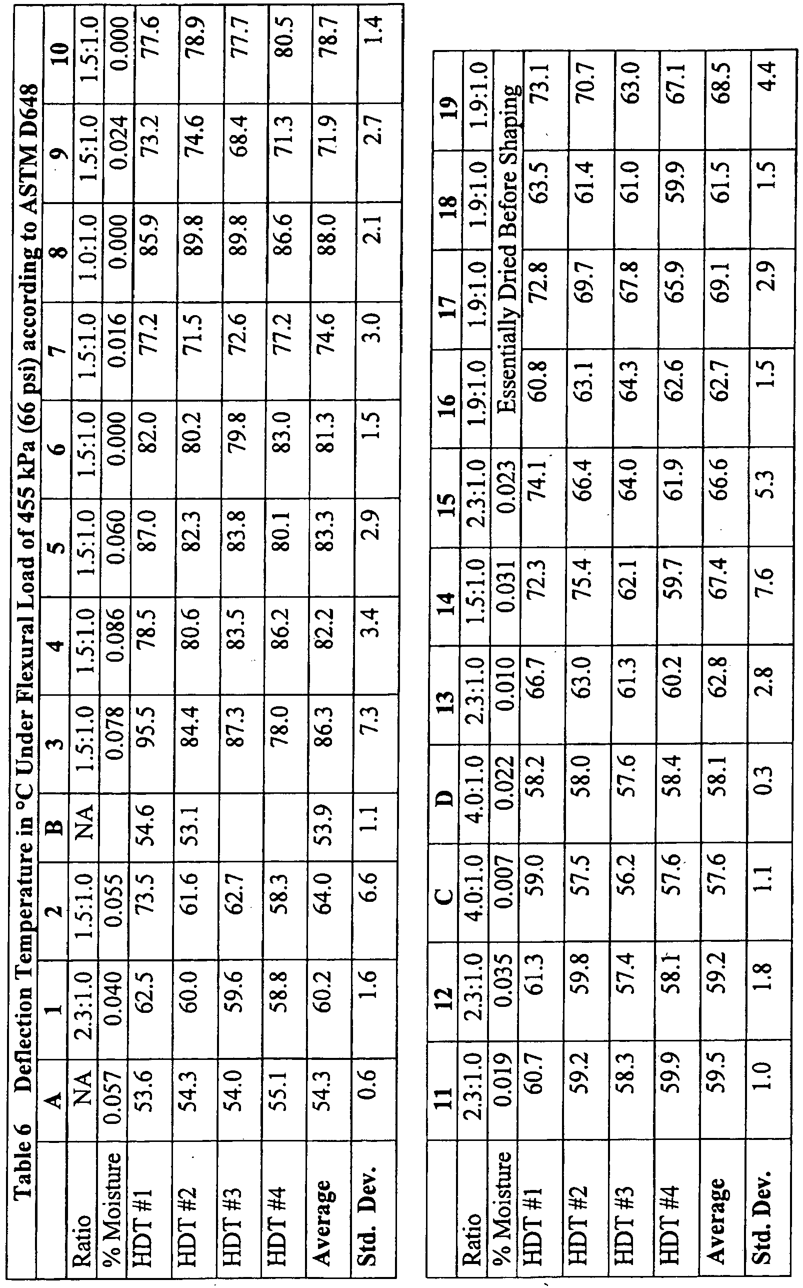

Table 6 provides several comparisons to understand the invention. All Examples demonstrated at least a 9% improvement in HDT and some demonstrated as much as a 62% improvement while retaining PLA as the principal component.

Comparative Example B, the attempted crosslinking of the PLA, did not work. The average HDT was worse, not better than Comparative Example A, neat PLA resin. Therefore, Comparative Example B proved what was obvious to try does not work.

All except Comparative Example B were "essentially dried before shaping." For purposes of this invention, "essentially dried before shaping" means a duration of drying at elevated temperature of sufficient duration to reduce moisture to less than 0.1 %. The elevated temperature can be above 40°C and up to about 60°C. In some cases, the duration can be as short as 4 hours if a higher elevated temperature is used. More likely, the duration is more than 6 hours, desirably between 12-24 hours, and as much as 40-48 hours to be totally thorough. One skilled in the art, without undue experimentation, can determine for a particular recipe found in blended compound the amount of time necessary to achieve sufficient drying to less than 0.1% moisture content, so that the blended compound is "essentially dried before shaping" into a plastic article.

A comparison of Examples 1 and 2 with Comparative Example A shows at least a 5°C increase in HDT, a significant advance with retention of PLA as the principal component. Indeed, use of 40 weight percent SMAC with PLA while retaining PLA as the principal component produced a 17.8% improvement in HDT, while use of 30 weight percent produced 10.8% improvement. Examples 1 and 2 also demonstrated that as little as four hours of pre-molding drying, at the upper limit drying temperature of 60 °C was sufficient to reduce moisture content to below 0.1%.

Examples 3-19 and Comparative Examples C and D all had samples which were essentially dried before shaping (below 0.1% moisture content), although the actual values for Examples 16-19 were not obtained.

What distinguished Examples 3-19 from Comparative Examples C and D was the ratio of PLA:SMAC, with Comparative Examples C and D having a ratio exceeding 2.3:1.0.

Therefore, the two requirements for achieving the 5 °C HDT goal for a compound in which PLA is the principal component are a weight ratio of PLA:SMAC of 2.3:1.0 or less and a compound which is essentially dried before shaping.

The variations among Examples 1-19 show that compatibilizer is optional, that impact modifier is optional, and that pre-extrusion drying of resins is optional. Therefore, without undue experimentation and recognizing the robust alternatives shown, one skilled in the art can construct a variety of modified PLA compounds which improve HDT by 5 °C or more over neat PLA resin and often have a HDT of at least 65°C and approaching 90°C, almost 200°F and beyond habitable conditions for any length of time.

Table 6 also reports standard deviation of the four HDT tests on different samples of each Example and Comparative Example. Examples 5-12 and 16-19 also contained PMMA as a compatibilizer. The presence of compatibilizer in these Examples reduced the variability in the performance of the four samples of each Example tested. The standard deviation was smaller, resulting in a current preference for a recipe such as Example 10, rather than Example 14, which is inventive but subject to greater variability than a commercial production might tolerate.

The compounds of the present invention, Examples 1-19, have unexpectedly greatly surpassed the previously unattainable goal of a delta HDT increase of at least 5 °C and preferably a 65°C HDT at 455 kPa (66 psi).

### Examples 20-25

Table 7 shows the raw material ingredients employed.

| **Table 7** | | | | |
|---|---|---|---|---|
| **Ingredients** | | | | |
| **Name** | **Brand** | **Composition** | **Manufacturer** | **Function** |
| PLA | NatureWorks^{®} Polylactide Resin 4042D | Polylactide Resin | NatureWorks LLC | Matrix |
| SMAC | Xiran SZ 22110 | Styrene Maleic Anydride resin | Polyscope | Heat Resistance Modifier |
| SMAC | Xiran SZ 26080 | Styrene Maleic Anydride resin | Polyscope | Heat Resistance Modifier |
| SMAC | Dylark FG2500 | Styrene Maleic Anhydride resin | Nova Chemicals | Heat Resistance Modifier |
| SMAC | Dylark FG7300 | Styrene Maleic Anhydride resin | Nova Chemicals | Heat Resistance Modifier |
| PMMA | Plexiglas^{®} VS-100 Acrylic Resin | Poly(Ethyl acrylate/ Methyl methacrylate) | Arkema Inc. | Compatibilizer |
| ABS | Blendex^{®} 338 | Acrylonitrile-ButadieneStyrene Polymer | Chemtura | Impact Modifier |

Table 8 shows the recipes for the compounds. Table 9 shows the extrusion conditions to produce pellets for later molding. Table 10 shows the molding conditions to produce molded articles as needed for the HDT testing. Table 11 shows the average of HDT results using four different samples of each Example.

| **Table 8** | | | | | | |
|---|---|---|---|---|---|---|
| **Recipes** | | | | | | |
| Example | 20 | 21 | 22 | 23 | 24 | 25 |
| PLA | 54.0 | 54.0 | 54.0 | 50.0 | 50.0 | 40.0 |
| SMAC SZ22110 | 36.0 | | | | | |
| SMAC SZ26080 | | 36.0 | | | 15.0 | |
| SMAC FG7300 | | | 36.0 | | | |
| SMAC FG2500 | | | | 50.0 | 35.0 | 60.0 |
| PMMA | 10.0 | 10.0 | | | | |
| PLA:SMAC Ratio | 1.5:1 | 1.5:1 | 1.5:1 | 1:1 | 1:1 | 0.67:1 |
| Resin Dried at 80°C for 8 hours prior to extrusion | Yes | | | | | |
| Drying time prior to molding | 48h | | | | | |
| Drying temperature prior to molding | 60 °C | | | | | |

| **Table 9** | | |
|---|---|---|
| **Extruder Conditions** | | |
| Extruder Type | | Prism 16mm Counter-Rotating Twin Screw Extruder |
| Order of Addition | | All ingredients mixed together and fed into the extruder hopper. |
| | 20-25 | |
| All Zones and Die (°C) | 220°C | |
| RPM | 250 | |

| **Table 10** | |
|---|---|
| **Molding Conditions** | |
| 88 ton Nissei molding machine | |
| Examples | 20-25 |

| **Drying Conditions:** | |
|---|---|
| Temperature (°C) | 60 |
| Time (h) | 48 |

| **Temperatures:** | |
|---|---|
| Nozzle (°C) | 220°C (428°F) |

| **Table 10** | |
|---|---|
| **Molding Conditions** | |
| 88 ton Nissei molding machine | |
| Examples | 20-25 |
| All Zones | 220°C (428°F) |
| Mold (°C) | 37.8°C (100°F) |
| Oil Temp (°C) | 37.8°C (100°F) |

| **Speeds:** | |
|---|---|
| Screw RPM (%) | 65 |
| % Shot - Inj Vel Stg 1 | 60 |
| % Shot - Inj Vel Stg 2 | 50 |
| % Shot - Inj Vel Stg 3 | 40 |
| % Shot - Inj Vel Stg 4 | 35 |
| % Shot - Inj Vel Stg 5 | 30 |

| **Pressures:** | |
|---|---|
| Hold Stg 1 (kPa)-Time (sec) | 2068.4 (300 psi) 7 |
| Hold Stg 2 (kPa)-Time (sec) | 1654.7 (240 psi) 7 |

| **Timers:** | |
|---|---|
| Injection Hold (sec) | 7 |
| Cooling Time (sec) | 25 |

| **Operation Settings:** | |
|---|---|
| Shot Size (mm) | 50 |
| Cushion (mm) | 1.0 |

| **Table 11** | | | | | | |
|---|---|---|---|---|---|---|
| **Deflection Temperature in °C Under Flexural Load of 455 kPa** | | | | | | |
| **(66 psi) according to ASTM D648** | | | | | | |
| | **20** | **21** | **22** | **23** | **24** | **25** |
| Ratio | 1.5:1.0 | 1.5:1.0 | 1.5:1.0 | 1.0:1.0 | 1.0:1.0 | 0.67:1.0 |
| % Moisture | Essentially Dried Before Shaping | | | | | |
| HDT #1 | 76.9 | 82.5 | 78.8 | 76.8 | 88.7 | 79.9 |
| HDT #2 | 81.3 | 80.3 | 79.7 | 73.5 | 85.3 | 82.8 |
| HDT #3 | 79.5 | 82.0 | 77.8 | 76.2 | 86.1 | -- |
| HDT #4 | 82.7 | 80.5 | 80.1 | 74.0 | 88.2 | -- |
| **Average** | 80.1 | 81.3 | 79.1 | 75.1 | 87.1 | 81.4 |
| **Std. Dev.** | 2.5 | 1.1 | 1.0 | 1.6 | 1.6 | 1.2 |

Examples 20-25, when compared with Example 5, which represents use of SMAC from the first set of SMAC candidates, show nearly equal or even better HDT properties are possible while using the second set of candidates. Example 23 is less than the other Examples of this set because Dylark 2500 is an impact grade of SMAC. But combining some of Xiran SZ26080 with Dylark 2500 as seen in Example 24 yields the best of this set of Examples for purposes of HDT.

The invention is not limited to the above embodiments.

## Claims

1. A heat resistant polylactic acid compound, comprising: a blend of
(a) polylactic acid and
(b) styrene maleic anhydride copolymer;
wherein polylactic acid is present in at least 30 weight percent of the compound; and
wherein polylactic acid and styrene maleic anhydride copolymer have a weight ratio of 2.3:1.0 or less; and
wherein if the blended compound is dried to have a moisture content of less than 0.1% before shaping into a plastic article, then the blended compound after shaping into the plastic article has a heat deflection temperature increase of at least 5°C more than the heat deflection temperature of the polylactic acid alone, when both are measured at 455 kPa (66 pounds per square inch) using the protocol of ASTM D648.

2. The compound of Claim 1, wherein if the blended compound is dried to have a moisture content of less than 0.1% before shaping into a plastic article, then the blended compound after shaping into the plastic article has a heat deflection temperature of at least 65°C at 455 kPa (66 pounds per square inch) using the protocol of ASTM D648.

3. The compound of Claim 1 or Claim 2 further comprising a poly(meth)acrylate.

4. The compound of Claim 1 or Claim 2, wherein the polylactic acid and the styrene maleic anhydride copolymer are dried before or during being blended together.

5. The compound of Claim 1 or Claim 2 or Claim 3, further comprising an impact modifier.

6. The compound of Claim 1 or Claim 2, further comprising calcium carbonate.

7. The compound of any of Claims 1-6, wherein the amount of styrene maleic anhydride copolymer ranges from 7 to 54 weight percent of the total compound and wherein polylactic acid and styrene maleic anhydride copolymer have a weight ratio of 1.9:1.0 or less.

8. The compound of any of Claims 1-7, wherein the blended compound after being essentially dried has a moisture content of less than 0.1 % and wherein the polylactic acid is the component having the highest or equal to highest weight percent of the compound among all ingredients employed.

9. A plastic article shaped from a blended compound of any of Claims 1-8.

10. The article of Claim 9, wherein the article is molded or extruded and wherein the article is shaped for use in transportation, appliance, electronics, building and construction, packaging, or consumer markets.

11. A method of making the compound of Claim 1 or Claim 2, comprising the steps of
(a) gathering ingredients including polylactic acid and styrene maleic anhydride copolymer and
(b) blending them into a compound for subsequent molding or extruding into a plastic article shaped for use in transportation, appliance, electronics, building and construction, packaging, or consumer markets.

12. A method of making the plastic article of Claim 9, comprising the steps of
(a) gathering ingredients including polylactic acid and styrene maleic anhydride copolymer;
(b) blending them into a compound for subsequent molding or extruding;
(c) drying the blended compound to a moisture content of less than 0.1 % and
(d) shaping the blended compound into a plastic article for use in transportation, appliance, electronics, building and construction, packaging, or consumer markets.

## Patentansprüche

1. Hitzebeständiges Polymilchsäure-Compound, umfassend: ein Blend von
(a) Polymilchsäure und
(b) Styrol-Maleinsäureanhydrid-Copolymer;
wobei Polymilchsäure wenigstens 30 Gew.-% des Compounds ausmacht; und
wobei Polymilchsäure und Styrol-Maleinsäureanhydrid-Copolymer ein Gewichtsverhältnis von 2,3:1,0 oder weniger aufweisen; und
wobei das Compoundblend, wenn das Compoundblend vor Ausformen zu einem Kunststoffartikel auf einen Feuchtegehalt von weniger als 0,1 % getrocknet wird, nach Ausformen zu dem Kunststoffartikel eine Zunahme der Wärmeformbeständigkeitstemperatur von wenigstens 5°C mehr als die Wärmeformbeständigkeitstemperatur der Polymilchsäure allein aufweist, wenn beide bei 455 kPa (66 Pounds per Square Inch) gemäß der Vorschrift von ASTM D648 gemessen werden.

2. Compound nach Anspruch 1, wobei das Compoundblend, wenn das Compoundblend vor Ausformen zu einem Kunststoffartikel auf einen Feuchtegehalt von weniger als 0,1% getrocknet wird, nach Ausformen zu dem Kunststoffartikel eine Wärmeformbeständigkeitstemperatur von wenigstens 65°C bei 455 kPa (66 Pounds per Square Inch) gemäß der Vorschrift von ASTM D648 aufweist.

3. Compound nach Anspruch 1 oder Anspruch 2, welches weiterhin ein Poly(meth)acrylat umfasst.

4. Compound nach Anspruch 1 oder Anspruch 2, wobei die Polymilchsäure und das Styrol-Maleinsäureanhydrid-Copolymer getrocknet werden, bevor oder während sie zusammengemischt werden.

5. Compound nach Anspruch 1 oder Anspruch 2 oder Anspruch 3, welches weiterhin einen Schlagzähmodifikator umfasst.

6. Compound nach Anspruch 1 oder Anspruch 2, welches weiterhin Calciumcarbonat umfasst.

7. Compound nach einem der Ansprüche 1-6, wobei die Menge an Styrol-Maleinsäureanhydrid-Copolymer 7 bis 54 Gew.-% des Gesamtcompounds ausmacht, und wobei Polymilchsäure und Styrol-Maleinsäureanhydrid-Copolymer ein Gewichtsverhältnis von 1,9:1,0 oder weniger aufweisen.

8. Compound nach einem der Ansprüche 1-7, wobei das Compoundblend, nachdem es im Wesentlichen getrocknet wurde, einen Feuchtegehalt von weniger als 0,1% aufweist, und wobei die Polymilchsäure von allen eingesetzten Bestandteilen die Komponente mit dem höchsten oder gleich dem höchsten Gewichtsprozentsatz des Compounds ist.

9. Kunststoffartikel, welcher aus einem Compoundblend nach einem der Ansprüche 1-8 geformt ist.

10. Artikel nach Anspruch 9, wobei der Artikel geformt oder extrudiert ist, und wobei der Artikel zur Verwendung im Transportwesen, in Haushaltsgeräten, in der Elektronik, im Bauwesen, im Verpackungswesen oder in Verbrauchermärkten ausgestaltet ist.

11. Verfahren zur Herstellung des Compounds nach Anspruch 1 oder Anspruch 2, umfassend die Schritte:
(a) Vereinigen der Bestandteile einschließlich Polymilchsäure und Styrol-Maleinsäureanhydrid-Copolymer und
(b) Mischen von diesen zu einem Compound zum späteren Formen oder Extrudieren zu einem Kunststoffartikel, der zur Verwendung im Transportwesen, in Haushaltsgeräten, in der Elektronik, im Bauwesen, im Verpackungswesen oder in Verbrauchermärkten ausgestaltet ist.

12. Verfahren zur Herstellung des Kunststoffartikels nach Anspruch 9, umfassend die Schritte:
(a) Vereinigen der Bestandteile einschließlich Polymilchsäure und Styrol-Maleinsäureanhydrid-Copolymer;
(b) Mischen von diesen zu einem Compound zum späteren Formen oder Extrudieren;
(c) Trocknen des Compoundblends auf einen Feuchtegehalt von weniger als 0,1 % und
(d) Ausformen des Compoundblends zu einem Kunststoffartikel zur Verwendung im Transportwesen, in Haushaltsgeräten, in der Elektronik, im Bauwesen, im Verpackungswesen oder in Verbrauchermärkten.

## Revendications

1. Composé à base d'acide polylactique thermorésistant, comprenant : un mélange de
(a) un acide polylactique et
(b) un copolymère de styrène-anhydride maléique ;
dans lequel l'acide polylactique est présent à hauteur d'au moins 30 % en poids du composé ; et
dans lequel l'acide polylactique et le copolymère de styrène-anhydride maléique ont un rapport pondéral de 2,3:1,0 ou moins ; et
dans lequel si le composé mélangé est séché de sorte à avoir une teneur en humidité inférieure à 0,1 % avant le façonnage en un article plastique, alors le composé mélangé après le façonnage en l'article plastique a une augmentation de la température de déflexion thermique au moins 5 °C supérieure à la température de déflexion thermique de l'acide polylactique seul, lorsque les deux sont mesurées à 455 kPa (66 livres par pouce carré) en utilisant le protocole de la norme ASTM D648.

2. Composé selon la revendication 1, dans lequel si le composé mélangé est séché de sorte à avoir une teneur en humidité inférieure à 0,1 % avant le façonnage en un article plastique, alors le composé mélangé après le façonnage en l'article plastique a une température de déflexion thermique d'au moins 65 °C à 455 kPa (66 livres par pouce carré) en utilisant le protocole de la norme ASTM D648.

3. Composé selon la revendication 1 ou la revendication 2, comprenant en outre un poly(méth)acrylate.

4. Composé selon la revendication 1 ou la revendication 2, dans lequel l'acide polylactique et le copolymère de styrène-anhydride maléique sont séchés avant ou pendant leur mélange.

5. Composé selon la revendication 1 ou la revendication 2 ou la revendication 3, comprenant en outre un modificateur d'impact.

6. Composé selon la revendication 1 ou la revendication 2, comprenant en outre du carbonate de calcium.

7. Composé selon l'une quelconque des revendications 1 à 6, dans lequel la quantité de copolymère de styrène-anhydride maléique est comprise dans la plage allant de 7 à 54 % en poids du composé total et dans lequel l'acide polylactique et le copolymère de styrène-anhydride maléique ont un rapport pondéral de 1,9:1,0 ou moins.

8. Composé selon l'une quelconque des revendications 1 à 7, dans lequel le composé mélangé après séchage a une teneur en humidité inférieure à 0,1 % et dans lequel l'acide polylactique est le composant ayant le pourcentage le plus élevé ou égal au plus élevé du composé parmi tous les ingrédients utilisés.

9. Article plastique façonné à partir d'un composé mélangé selon l'une quelconque des revendications 1 à 8.

10. Article selon la revendication 9, dans lequel l'article est moulé ou extrudé et dans lequel l'article est façonné pour une utilisation dans les transports, les dispositifs, l'électronique, le bâtiment et la construction, les emballages ou les marchés de consommateur.

11. Procédé de préparation du composé selon la revendication 1 ou la revendication 2, comprenant les étapes consistant à :
(a) rassembler les ingrédients incluant l'acide polylactique et le copolymère de styrène-anhydride maléique ; et
(b) les mélanger en un composé pour le moulage ou l'extrusion ultérieure en un article plastique façonné pour une utilisation dans les transports, les dispositifs, l'électronique, le bâtiment et la construction, les emballages ou les marchés de consommateur.

12. Procédé de préparation de l'article plastique selon la revendication 9, comprenant les étapes consistant à :
(a) rassembler les ingrédients incluant l'acide polylactique et le copolymère de styrène-anhydride maléique ;
(b) les mélanger en un composé pour le moulage ou l'extrusion ultérieure ;
(c) sécher le composé mélangé à une teneur en humidité inférieure à 0,1 % ; et
(d) façonner le composé mélangé en un article plastique façonné pour une utilisation dans les transports, les dispositifs, l'électronique, le bâtiment et la construction, les emballages ou les marchés de consommateur.
